# EUROPEAN PATENT SPECIFICATION

(11) **EP 2 053 730 B1**
(45) Date of publication and mention of the grant of the patent: **17.06.2015**
(21) Application number: 06807896.3
(22) Date of filing: 31.07.2006
(51) Int. Cl.: H02M 7/5387, H02J 3/38

(54) **SINGLE-PHASE INVERTER CIRCUIT FOR CONDITIONING AND CONVERTING DC ELECTRICAL ENERGY INTO AC ELECTRICAL ENERGY**
EINPHASENWECHSELRICHTERSCHALTUNG ZUM AUFBEREITEN UND UMWANDELN VON ELEKTRISCHER GLEICHSTROMENERGIE IN ELEKTRISCHE WECHSELSTROMENERGIE
CIRCUIT INVERSEUR MONOPHASÉ POUR CONDITIONNER ET CONVERTIR L'ÉNERGIE ÉLECTRIQUE À COURANT CONTINU EN ÉNERGIE ÉLECTRIQUE À COURANT ALTERNATIF

(43) Date of publication of application: 29.04.2009
(73) Proprietor: Ingeteam Power Technology, S.A., 48170 Zamudio (Bizkaia) (ES)
(72) Inventor: GONZALEZ SENOSIAIN, Roberto, 31008 Pamplona (ES); COLOMA CALAHORRA, Javier, 31008 Pamplona (ES); MARROYO PALOMO, Luis, 31008 Pamplona (ES); LOPEZ TABERNA, Jesus, 31008 Pamplona (ES); SANCHIS GURPIDE, Pablo, 31008 Pamplona (ES)
(74) Representative: Carpintero Lopez, Francisco
(86) International application number: PCT/ES2006/000448
(87) International publication number: WO 2008/015298

(56) References cited:
- EP-A2- 1 026 816
- EP-A2- 1 369 985
- EP-A2- 1 369 985
- DE-C1- 19 732 218
- GB-A- 2 415 841
- GB-A- 2 415 841
- JP-A- 10 174 452
- US-A1- 2005 286 281
- US-A1- 2005 286 281

## Description

### OBJECT OF THE INVENTION

The present invention has its main field of application in the industry dedicated to the design of electronic devices and, more particularly, to those conceived within the sector of photovoltaic solar energy power systems.

The object of the invention is to provide a dc/ac conversion structure specially designed for photovoltaic systems connected to the electric grid without a transformer, characterized in being simple, highly efficient and minimizing the problems of electromagnetic compatibility.

### BACKGROUND OF THE INVENTION

Photovoltaic systems connected to the grid are today enjoying wide acceptance in our society, and are now being used with increasing frequency. Commonly, they involve installations formed by a group of solar panels and an electronic converter, called an inverter, which conditions the energy produced by the panels and injects it into the electric grid.

In most cases, the converters for these installations are private low-power single-phase circuits, wherein the objective sought is to maximize the economic return obtained by selling the energy produced to electricity companies. For this reason, the inverters required must be cheap, reliable and highly efficient.

Usually a low-frequency transformer is included in the conversion stage in photovoltaic installations connected to the grid. This transformer guarantees galvanic isolation between the installation and the grid and reduces electromagnetic emissions. The main drawback of the low-frequency output transformer is its considerable size and weight, as well as substantially increasing the price of the conversion stage and, therefore, making the photovoltaic installation as a whole more expensive.

The evolution of technology means that today it is possible to dispense with this transformer without reducing the properties of the system as regards personal safety and integration in the grid, thereby questioning the need for its use. In the near future, the obligation to use an output transformer is expected to gradually disappear.

If the transformer is removed, the galvanic isolation between the photovoltaic system and the grid is lost, which impairs system behaviour regarding Electromagnetic Compatibility (EMC). In this event, it is desirable to use conversion topologies that minimize EMC problems.

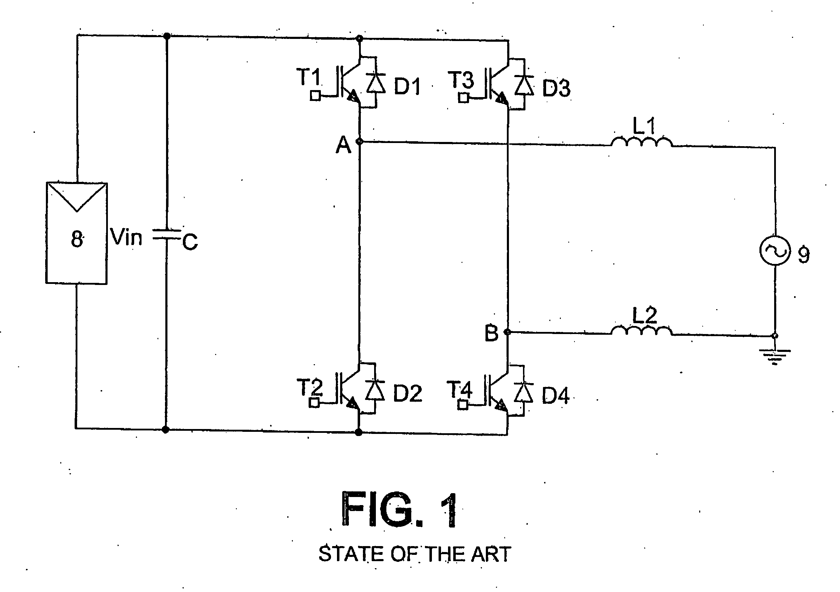

The use of a transformer in photovoltaic systems has allowed an H-bridge with unipolar modulation to be employed as the conversion structure, which structure has demonstrated the best efficiency versus complexity relationship. However, this structure behaves poorly from the point of view of EMC. Figure 1 shows an H-bridge. This structure comprises two parallel branches, each with its own pair of switches or switching elements in series (T1, T2 and T3, T4), usually transistors, with diodes in anti-parallel (D1, D2, D3, D4).

An option to improve inverter behaviour regarding EMC, is to use bipolar modulation. In this modulation, the T1-T4 and T2-T3 switch pairs switch alternately, obtaining voltages at the output points of the H-bridge having the value of the input voltage with positive and negative sign (+Vin or -Vin). However, bipolar modulation has two disadvantages with respect to unipolar modulation. On one hand, the current ripple in the coil with bipolar modulation is greater. On the other hand, to obtain the same current ripple frequency in the coil in bipolar modulation, it is necessary to switch at twice the frequency, which means it has twice the switching loss. This, together with the fact that the semiconductors have to withstand all the input voltage, implies a decrease in the efficiency obtained with this structure.

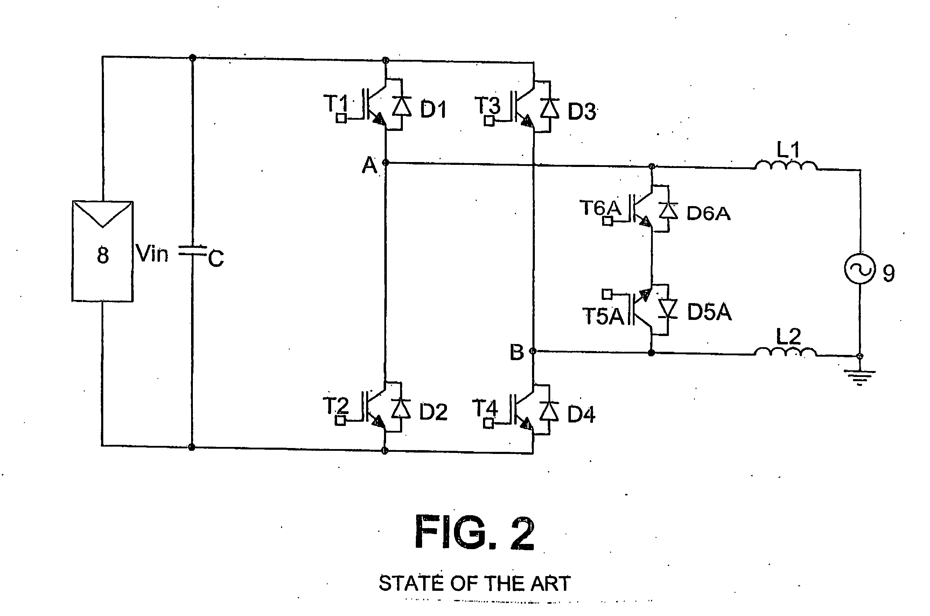

In the resolution of the deficiencies in the structures of the aforementioned inverters, it is necessary to cite the proposal of European patent application EP1369985. The inverter circuit described in the aforementioned document consists of an H-bridge switching at high frequency with bipolar modulation, to which a third branch is added on the alternating side, between the output points (A, B) of the full bridge inverter which is switching at the grid frequency, as shown schematically in Figure 2. This structure, which includes six transistors, improves the behaviour and global efficiency of the photovoltaic converter with respect to the H-bridge with bipolar modulation, according to the operating mode explained in EP1369985.

This converter described in EP1369985 has two advantages with respect to the H-bridge with bipolar modulation: one, the switching of the transistors of the H-bridge is carried out with half the input voltage, which reduces the switching losses of the converter; two, the maximum current ripple in the coil is half that in the bipolar H-bridge, which allows a smaller coil to be used. However, although the transistors switch with half the input voltage, in the cutoff state they support all the input voltage (Vin) whereby all of them, those in the H-bridge plus those of the additional branch on the alternating side (T5A-T6A), have to be sized for said voltage. Since switching losses increase with the voltage capacity of the transistor, this feature restricts improvements in performance.

### DESCRIPTION OF THE INVENTION

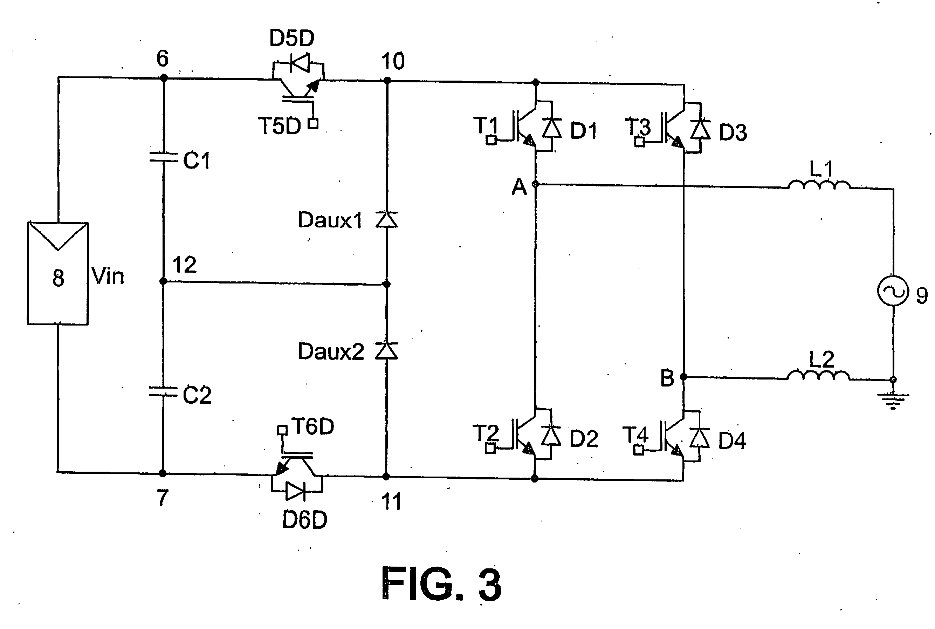

The invention described herein corresponds to a dc/ac inverter circuit specially applicable as a conversion stage in photovoltaic installations connected to the grid, as shown in Figure 3.

Said circuit minimizes EMC problems, and has a higher efficiency than those previously proposed.

The circuit of the invention is a single-phase inverter that is connected to a direct current energy source and transforms it into alternating current energy to be fed into an electric grid. The topology of the inverter circuit essentially comprises:
- a temporary energy accumulator that can consist of one or more accumulators connected in series in one or more branches in parallel with the energy source, across the direct current connections of the circuit;
- an inverter that is configured as a full bridge or H-bridge comprising at least two parallel branches each with a pair of switching elements in series, consisting of MOSFET, IGBT or another type of transistor that adapts to this configuration with or without their corresponding diodes in anti-parallel;
- two auxiliary switching elements (T5D, T6D), with or without their respective diodes in anti-parallel (D5D and D6D), connected across the direct current connections and the input of the H-bridge;
- a branch with at least one auxiliary diode connected in anti-parallel to the H-bridge across the respective connections of the auxiliary switching elements and said H-bridge; and
- at least two output points, which correspond with the centre-taps of the branches of the H-bridge, which constitute alternating current connections, to which inductances are connected, it being possible to connect the electric grid between the inductances.

The switching elements of the H-bridge, which comprise a first pair of transistors (T1, T4) and a second pair (T2, T3), work as an inverter, switching at grid frequency and in synchronism therewith. During the positive half-cycle T1 and T4 are on, while in the negative half-cycle T2 and T3 will be on.

The pair of auxiliary switching elements, T5D and T6D, are capable of switching synchronously by means of a given trigger signal or with independent signals for each switch.

The operation of the converter can be explained during a switching period of the positive grid half-cycle. T1 and T4 are on during the entire positive half-cycle. When T5D and T6D are on, the input voltage is applied across points A and B. The current flows through T5D, T1, T4 and T6D.

When T5D and T6D are off, the current in the coils is closed through Daux1, T1, T4 and Daux2. During this period of time a decoupling takes place between the direct current side and the alternating current side.

The control signals are defined in a command unit that has at least one computation unit and software to implement the control strategy. The computation module comprises at least one programmable electronic device, which can be a general-purpose microprocessor, a micro-controller, a digital signal microprocessor (DSP), an application-specific integrated circuit (ASIC), a field-programmable gate array (FPGA) or any combination of the foregoing, serving to establish the updated values of the energy source working point.

The main advantages of the invention are:
- The maximum ripple is half that in the H-bridge with PWM bipolar modulation, which allows smaller output inductances to be used.
- The problems associated with EMC are minimized.
- Transistors T1, T2, T3, T4, which switch at low frequency, have to be sized to withstand the input voltage, while the auxiliary switching elements (T5D, T6D) which switch at high frequency, have to be sized to support half the input voltage. This implies an improvement when compared with the conversion structure that EP1369985 proposes, wherein six transistors are also used but all have to be sized to withstand the entire input voltage.
- A further improvement with regard to the precedent EP1369985 is that the T1-T4 and T2-T3 pairs switch at grid frequency, whereby there are hardly any switching losses in them, it being possible to use low saturation voltage semiconductors.

The number of semiconductors that conduct at all times in this converter is higher than in some of the conversion topologies of the current state of the art, for which reason there will be more conduction losses. However, the switching losses in the circuit object of the invention are smaller than in the other structures. This is because the semiconductors that switch at high frequency, T5D and T6D, in addition to switching at half the input voltage, in contrast with the topologies already cited, this is also the maximum voltage that they have to withstand, therefore this is the voltage for which they should be sized. Thus, a better efficiency is achieved than in state of the art converters.

### DESCRIPTION OF THE DRAWINGS

To supplement the description that is being made and with the object of assisting in a better understanding of the characteristics of the invention, in accordance with a preferred example of a practical embodiment thereof, attached as an integral part of said description is a set of drawings wherein by way of illustration and not restrictively, the following has been represented:
Figure 1.- Shows a configuration for a photovoltaic converter known in the state of the art as an H-bridge.
Figure 2 - Shows another possible configuration for a direct voltage to alternating current or voltage converter, also applicable in photovoltaic systems, according to an embodiment proposed in European patent application EP1369985 pertaining to the state of the art.
Figure 3.- Shows a diagram of the structure of the circuit of the invention according to a preferred embodiment.
Figure 4.- Shows a diagram of the structure of the circuit of the invention according to another preferred embodiment.

### PREFERRED EMBODIMENT OF THE INVENTION

In the light of Figure 3, a first practical embodiment of the invention can be described as a single-phase inverter circuit to condition an energy source (8), formed by a photovoltaic array or another energy source adapted to supply a continuous input voltage (Vin) that can be transformed into an alternating grid voltage capable of delivering an alternating current to an electric grid (9), comprising:
- two direct current connections (6, 7) across which at least one branch is connected with one or several temporary energy accumulators;
- an inverter with in an H-bridge configuration formed by at least two parallel branches, a first pair of switching elements in series (T1, T2) being connected to one branch and a second pair of switching elements in series (T3, T4) to the other branch, and it being possible for their respective diodes in anti-parallel (D1, D2, D3, D4) to be connected in anti-parallel to each switching element (T1, T2, T3. T4); and
- at least two alternating current connections (A, B) corresponding to the centre-taps of the H-bridge branches, their corresponding inductances (L1, L2) being connected to each one of them, preferably with the same value L1 = L2 = L/2;
   characterised in adding the following elements in its structure:
- two branches connected in series with the H-bridge in the direct current connections (6, 7) with two auxiliary switching elements (T5D, T6D) with or without their respective protection diodes (D5D, D6D) in anti-parallel; and
- at least one of the branches with temporary energy accumulator elements, connected across the points (6, 7) has a centre-tap (12); and
- a branch with two auxiliary diodes in series (Daux1, Daux2) which are connected in anti-parallel to the input of the H-bridge in some points (10) and (11). The centre-tap of this branch is joined to the centre-tap of the temporary energy accumulators (12). These branches signify a topological limit to the voltage that can be applied to T5D and T6D, at the voltage of C1 and C2 respectively.

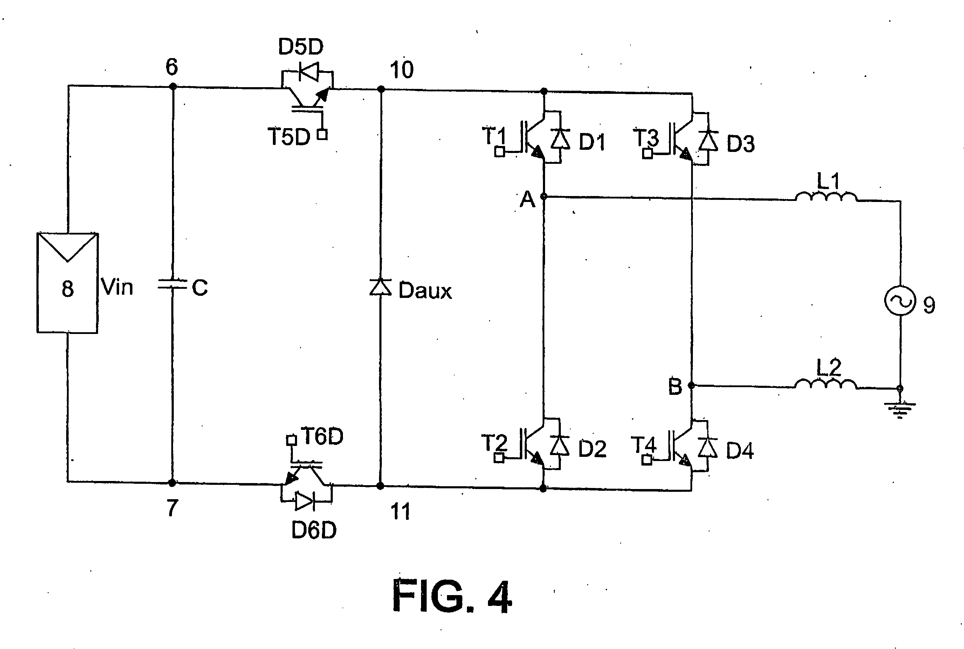

A second alternative implementation of the invention is that presented in Figure 4 and which relates to a single-phase inverter circuit with a substantially similar structure but which requires a smaller number of semiconductor elements. The distinguishing characteristics of this second configuration are:
- the temporary energy accumulator (C) connected across the two direct current connections (6, 7) does not need a centre-tap;
- there is a single auxiliary diode (Daux) in the branch connected across points (10) and (11).
- In this case, the maximum voltage applied to the auxiliary switches (T5D, T6D) is not limited by topology, but instead it is conditioned by the switching characteristics of these elements.

It is possible to add a command unit to either of these two structures with a function similar to that of any of the control strategies possible for known converters, which basically consists in governing the switching of all the switching elements by means of a series of on signals produced at the output of said command unit.

The terms in which this specification has been written are to be taken always in the broadest sense and not restrictively.

## Claims

1. A single-phase inverter circuit to condition and transform direct current electric power into alternating current electric power for the provision thereof to an electric grid (9), comprising:
• two direct current connections (6, 7) across which at least one branch is connected with at least one temporary energy accumulator;
• an H-bridge configuration inverter comprising at least two parallel branches, a first pair of switching elements in series (T1, T2) being connected to one branch and a second pair of switching elements in series (T3, T4) to the other branch; and
• at least two alternating current connections (A, B) corresponding to the centre-taps of the H-bridge branches with an inductance (L1, L2) being connected to each branch;
**characterised in that** at least one of the branches with temporary energy accumulator elements, connected between the two direct current connections (6, 7), has a centre-tap (12)
and **in that** the circuit additionally comprises:
• two auxiliary switching elements (T5D, T6D), connected across the direct current connections (6, 7) and the input of the H-bridge at some points (10,11); and
• a branch with two auxiliary diodes in series (Daux, Daux1, Daux2) connected in anti-parallel at the input points (10, 11) of the H-bridge the centre-tap of which is joined to the centre-tap (12) of the temporary energy accumulators.

2. An inverter circuit according to claim 1, **characterised in that** each switching element (T1, T2, T3, T4) is connected in anti-parallel to a diode (D1, D2, D3, D4) respectively.

3. An inverter circuit according to any one of the preceding claims, **characterised in that** each auxiliary switching element (T5D, T6D) is connected in anti-parallel to a protection diode (D5D and D6D) respectively.

4. An inverter circuit according to claim 1, **characterised in that** the temporary energy accumulator elements are constituted by capacitive elements, ultracapacitors, batteries, or combinations of these elements.

5. An inverter circuit according to claim 1, **characterised in that** the two pairs of switching elements in series (T1, T2, T3, T4) of the H-bridge and the pair of auxiliary switching elements (T5D, T6D) are transistors.

6. An inverter circuit according to claim 5, **characterised in that** the type of transistors is selected between IGBT and MOSFET.

7. An inverter circuit according to any one of the preceding claims, **characterised in that** it is connected to a command unit adapted to govern the switching by means of a series of on signals produced at the output thereof suitably aimed at the switching elements (T1, T2, T3, T4) of the H-bridge and of the pair of auxiliary switching elements (T5D, T6D).

8. An inverter circuit according to claim 7, **characterised in that** the command unit contains at least one computation module, which comprises at least one programmable electronic device which is chosen from a general-purpose processor, a microcontroller, a digital signal processor (DSP), an application-specific integrated circuit (ASIC) and a field programmable gate array (FPGA).

9. An inverter circuit according to any one of the preceding claims, **characterised in that** the two pairs of switching elements in series (T1-T2, T3-T4) are capable of switching synchronously with the electric grid by means of two complementary on signals.

10. An inverter circuit according to any one of the preceding claims, **characterised in that** the two pairs of switching elements in series (T1-T2, T3-T4) are capable of switching synchronously with the control signal that comes from the command unit and is previously calculated by the computation module.

11. An inverter circuit according to any one of the preceding claims, **characterised in that** the pair of auxiliary switching elements (T5D, T6D) are capable of switching synchronously by means of a single on signal, defined by means of a known modulation technique, generated from the control signal that comes from the command unit and is previously calculated by the computation module.

12. An inverter circuit according to any one of claims 1 to 10, **characterised in that** the pair of auxiliary switching elements (T5D, T6D) are capable of switching individually by means of two on signals, defined by means of a known modulation technique, generated from the control signals that come from the command unit and are previously calculated by the computation module.

13. An inverter circuit according to any one of claims 11 or 12, **characterised in that** the on signals are defined by means of a pulse width modulation.

14. An inverter circuit according to any one of the preceding claims, **characterised in that** the values of the inductances (L1, L2) in series are the same.

15. An inverter circuit according to any one of the preceding claims, **characterised in that** it is incorporated in a converter of the transformerless type.

16. An inverter circuit according to any one of the preceding claims, **characterised in that** an energy source (8) is connected to the direct current connections (6, 7) that is chosen from a photovoltaic array and an electrochemical cell unit.

17. An inverter circuit according to any one of the preceding claims, **characterised in that** it additionally comprises at least one dc/dc converter, connected between the input energy source (8) and the temporary energy accumulator.

18. An inverter circuit according to claim 17, **characterised in that** the converter is fitted with galvanic isolation between the facility and the grid, implemented by an output transformer.

## Patentansprüche

1. Einphasenwechselrichterschaltung zum Aufbereiten und Umwandeln von elektrischer Gleichstromenergie in elektrische Wechselstromenergie zur Einspeisung in ein Stromversorgungsnetz (9) umfassend:
- zwei Gleichstromanschlüsse (6, 7), mit denen mindestens ein Zweig im Nebenschluss mit mindestens einem temporären Energiespeicher verbunden ist;
- einen Wechselrichter mit H-Brücke, der mindestens zwei parallele Zweige umfasst, wobei ein erstes Paar von in Reihe geschalteten Schaltelementen (T1, T2) mit einem Zweig und ein zweites Paar von in Reihe geschalteten Schaltelementen (T3, T4) mit dem anderen Zweig verbunden sind; und
- mindestens zwei Wechselstromanschlüsse (A, B), die den Mittelanzapfungen der H-Brückenzweige entsprechen, wobei eine Induktivität (L1, L2) mit jedem Zweig verbunden ist;
**dadurch gekennzeichnet, dass** mindestens einer der Zweige mit temporären Energiespeicherelementen, die zwischen den beiden Gleichstromanschlüssen (6, 7) angeschlossen sind, eine Mittelanzapfung (12) hat
und dass die Schaltung außerdem folgendes umfasst:
- zwei Hilfsschaltelemente (T5D, T6D), die im Nebenschluss mit den Gleichstromanschlüssen (6, 7) und Eingangspunkten (10, 11) der H-Brücke geschaltet sind; und
- einen Zweig mit zwei in Reihe geschalteten Hilfsdioden (Daux, Daux1, Daux2), die antiparallel mit den Eingangspunkten (10, 11) der H-Brücke verbunden sind, dessen Mittelanzapfung mit der Mittelanzapfung 12 der temporären Energiespeicher verbunden ist.

2. Wechselrichterschaltung gemäß Anspruch 1, **dadurch gekennzeichnet, dass** jedes Schaltelement (T1, T2, T3, T4) jeweils antiparallel mit einer Diode (D1, D2, D3, D4) verbunden ist.

3. Wechselrichterschaltung gemäß einem der vorstehenden Ansprüche, **dadurch gekennzeichnet, dass** jedes Hilfsschaltelement (T5D, T6D) jeweils antiparallel mit einer Schutzdiode (D5D bzw. D6D) verbunden ist.

4. Wechselrichterschaltung gemäß Anspruch 1, **dadurch gekennzeichnet, dass** die temporären Energiespeicherelemente aus kapazitiven Elementen, Superkondensatoren, Batterien oder Kombinationen dieser Elemente bestehen.

5. Wechselrichterschaltung gemäß Anspruch 1, **dadurch gekennzeichnet, dass** die beiden Paare von in Reihe geschalteten Schaltelementen (T1, T2, T3, T4) der H-Brücke und das Paar von Hilfsschaltelementen (T5D, T6D) Transistoren sind.

6. Wechselrichterschaltung gemäß Anspruch 5, **dadurch gekennzeichnet, dass** es sich bei den Transistoren um solche vom Typ IGBT oder vom Typ MOSFET handelt.

7. Wechselrichterschaltung gemäß einem der vorstehenden Ansprüche, **dadurch gekennzeichnet, dass** sie mit einer Befehlseinheit verbunden ist, die geeignet ist, das Schalten mittels einer Serie von Einschaltsignalen zu steuern, die am Ausgang derselben erzeugt werden und auf geeignete Weise die Schaltelemente (T1, T2, T3, T4) der H-Brücke und das Paar von Hilfsschaltelementen (T5D, T6D) ansteuern.

8. Wechselrichterschaltung gemäß Anspruch 7, **dadurch gekennzeichnet, dass** die Befehlseinheit mindestens ein Rechenmodul enthält, welches mindestens ein programmierbares elektronisches Gerät enthält, bei dem es sich um einen Mehrzweckprozessor, einen Mikrocontroller, einen digitalen Signalprozessor (DSP), einen anwendungsspezifischen Schaltkreis (ASIC) oder ein Field Programmable Gate Array (FPGA) handelt.

9. Wechselrichterschaltung gemäß einem der vorstehenden Ansprüche, **dadurch gekennzeichnet, dass** die beiden Paare von in Reihe geschalteten Schaltelementen, (T1-T2, T3-T4) mittels zweier ergänzender Einschaltsignale in der Lage sind, synchron mit dem Stromversorgungsnetz zu schalten.

10. Wechselrichterschaltung gemäß einem der vorstehenden Ansprüche, **dadurch gekennzeichnet, dass** die beiden Paare von in Reihe geschalteten Schaltelementen (T1-T2, T3-T4) in der Lage sind, synchron mit dem Steuersignal zu schalten, das von der Befehlseinheit kommt und zuvor von dem Rechenmodul berechnet wurde.

11. Wechselrichterschaltung gemäß einem der vorstehenden Ansprüche, **dadurch gekennzeichnet, dass** die ein Paar bildenden Hilfsschaltelemente (T5D, T6D) in der Lage sind, mittels eines einzigen, durch eine bekannte Modulationstechnik definierten Einschaltsignals, das aus dem Steuersignal erzeugt wird, welches von der Befehlseinheit kommt und zuvor vom Rechenmodul berechnet wird, synchron zu schalten.

12. Wechselrichterschaltung gemäß einem der Ansprüche 1-10, **dadurch gekennzeichnet, dass** die ein Paar bildenden Hilfsschaltelemente (T5D, T6D) in der Lage sind, mittels zweier durch eine bekannten Modulationstechnik definierter Einschaltsignale, die aus den Steuersignalen erzeugt werden, welche von der Befehlseinheit kommen und zuvor vom Rechenmodul berechnet werden, einzeln zu schalten.

13. Wechselrichterschaltung gemäß einem der Ansprüche 11 oder 12, **dadurch gekennzeichnet, dass** die Einschaltsignale durch Pulsbreitenmodulation definiert werden.

14. Wechselrichterschaltung gemäß einem der vorstehenden Ansprüche, **dadurch gekennzeichnet, dass** die Werte der in Reihe geschalteten Induktivitäten (L1, L2) identisch sind.

15. Wechselrichterschaltung gemäß einem der vorstehenden Ansprüche, **dadurch gekennzeichnet, dass** sie in einen transformatorenlosen Wandler integriert ist.

16. Wechselrichterschaltung gemäß einem der vorstehenden Ansprüche, **dadurch gekennzeichnet, dass eine** Energiequelle (8), an die Gleichstromanschlüsse (6, 7) angeschlossen ist, bei der es sich um eine Photovoltaikanlage oder ein elektrochemisches Element handelt.

17. Wechselrichterschaltung gemäß einem der vorstehenden Ansprüche, **dadurch gekennzeichnet, dass** sie zusätzlich mindestens einen Gleichspannungswandler umfasst, welcher zwischen der Eingangsenergiequelle (8) und dem temporären Energiespeicher geschaltet ist.

18. Wechselrichterschaltung gemäß Anspruch 17, **dadurch gekennzeichnet, dass** der Wandler mit galvanischer Trennung zwischen der Einrichtung und dem Stromversorgungsnetz versehen ist, welche durch einen Ausgangstransformator implementiert ist.

## Revendications

1. Circuit d'onduleur monophasé pour conditionner et transformer de l'énergie électrique à courant continu en énergie électrique à courant alternatif pour la fournir à un réseau électrique (9), comprenant :
- deux connexions de courant continu (6, 7) entre lesquelles au moins une branche est connectée à au moins un accumulateur temporaire d'énergie ;
- un onduleur à configuration en pont en H comprenant au moins deux branches parallèles, une première paire d'éléments de commutation en série (T1, T2) étant connectée à une branche et une deuxième paire d'éléments de commutation en série (T3, T4) à l'autre branche ; et
- au moins deux connexions de courant alternatif (A, B) correspondant aux prises centrales des branches du pont en H avec une inductance (L1, L2) connectée à chaque branche ;
**caractérisé en ce qu'**au moins l'une des branches munies d'éléments accumulateurs temporaires d'énergie, connectée entre les deux connexions de courant continu (6, 7), comporte une prise centrale (12)
et **en ce que** le circuit comprend en outre :
- deux éléments de commutation auxiliaires (T5D, T6D), connectés aux connexions de courant continu (6, 7) et à l'entrée du pont en H en certains points (10, 11) ; et
- une branche avec deux diodes auxiliaires en série (Daux, Daux1, Daux2) connectées en antiparallèle aux points d'entrée (10, 11) du pont en H, dont la prise centrale est reliée à la prise centrale (12) des accumulateurs temporaires d'énergie.

2. Circuit onduleur selon la revendication 1, **caractérisé en ce que** chaque élément de commutation (T1, T2, T3, T4) est connecté en antiparallèle à une diode (D1, D2, D3, D4) respectivement.

3. Circuit onduleur selon l'une quelconque des revendications précédentes, **caractérisé en ce que** chaque élément de commutation auxiliaire (T5D, T6D) est connecté en anti-parallèle à une diode de protection (D5D, D6D) respectivement.

4. Circuit onduleur selon la revendication 1, **caractérisé en ce que** les éléments accumulateurs temporaires d'énergie sont constitués d'éléments capacitifs, d'ultra-condensateurs, de batteries, ou de combinaisons de ces éléments.

5. Circuit onduleur selon la revendication 1, **caractérisé en ce que** les deux paires d'éléments de commutation en série (T1, T2, T3, T4) du pont en H et la paire d'éléments de commutation auxiliaires (T5D, T6D) sont des transistors.

6. Circuit onduleur selon la revendication 5, **caractérisé en ce que** le type des transistors est choisi entre IGBT et MOSFET.

7. Circuit onduleur selon l'une quelconque des revendications précédentes, **caractérisé en ce qu'**il est connecté à un module de commande adapté à gouverner la commutation au moyen d'une série de signaux de marche produits au niveau de sa sortie et dirigés de façon appropriée vers les éléments de commutation (T1, T2, T3, T4) du pont en H et de la paire d'éléments de commutation auxiliaire (T5D, T6D).

8. Circuit onduleur selon la revendication 7, **caractérisé en ce que** le module de commande comprend au moins un module de calcul, qui comprend au moins un dispositif électronique programmable qui est choisi parmi un processeur d'usage général, un microcontrôleur, un processeur de signal numérique (DSP), un circuit intégré spécifique d'application (ASIC) et un réseau de portes programmable sur site (FPGA).

9. Circuit onduleur selon l'une quelconque des revendications précédentes, **caractérisé en ce que** les deux paires d'éléments de commutation en série (T1-T2, T3-T4) sont capables de commuter de façon synchrone avec le réseau électrique au moyen de deux signaux de marche complémentaires.

10. Circuit onduleur selon l'une quelconque des revendications précédentes, **caractérisé en ce que** les deux paires d'éléments de commutation en série (T1-T2, T3-T4) sont capables de commuter de façon synchrone avec le signal de commande qui provient du module de commande et est calculé précédemment par le module de calcul.

11. Circuit onduleur selon l'une quelconque des revendications précédentes, **caractérisé en ce que** la paire d'éléments de commutation auxiliaires (T5D, T6D) est capable de commuter de façon synchrone au moyen d'un seul signal de marche, défini au moyen d'une technique de modulation connue, généré à partir du signal de commande qui provient du module de commande et est calculé précédemment par le module de calcul.

12. Circuit onduleur selon l'une quelconque des revendications 1 à 10, **caractérisé en ce que** la paire d'éléments de commutation auxiliaires (T5D, T6D) est capable de commuter individuellement au moyen de deux signaux de marche, définis au moyen d'une technique de modulation connue, générés à partir des signaux de commande qui proviennent du module de commande et sont calculés précédemment par le module de calcul.

13. Circuit onduleur selon l'une quelconque des revendications 11 ou 12, **caractérisé en ce que** les signaux de marche sont définis au moyen d'une modulation par largeur d'impulsion.

14. Circuit onduleur selon l'une quelconque des revendications précédentes, **caractérisé en ce que** les valeurs des inductances (L1, L2) en série sont les mêmes.

15. Circuit onduleur selon l'une quelconque des revendications précédentes, **caractérisé en ce qu'**il est intégré dans un convertisseur du type sans transformateur.

16. Circuit onduleur selon l'une quelconque des revendications précédentes, **caractérisé en ce qu'**une source d'énergie (8) est connectée aux connexions de courant continu (6, 7), qui est choisie parmi un réseau photovoltaïque et un module à élément électrochimique.

17. Circuit onduleur selon l'une quelconque des revendications précédentes, **caractérisé en ce qu'**il comprend en outre au moins un convertisseur dc/dc, connecté entre la source d'énergie d'entrée (8) et l'accumulateur temporaire d'énergie.

18. Circuit onduleur selon la revendication 17, **caractérisé en ce que** le convertisseur est muni d'une isolation galvanique entre l'installation et le réseau, mise en oeuvre par un transformateur de sortie.
